# EUROPÄISCHE PATENTSCHRIFT

(11) **EP 2 775 181 B1**
(45) Veröffentlichungstag und Bekanntmachung des Hinweises auf die Patenterteilung: **13.01.2016**
(21) Anmeldenummer: 13158318.9
(22) Anmeldetag: 08.03.2013
(51) Int. Cl.: F16K 37/00

(54) **Ventil mit einer Leckageanzeige**
Valve with a leakage display
Soupape dotée d'un affichage des fuites

(43) Veröffentlichungstag der Anmeldung: 10.09.2014
(73) Patentinhaber: Georg Fischer Rohrleitungssysteme AG, 8201 Schaffhausen (CH)
(72) Erfinder: Hein, Oliver, 8246 Langwiesen (CH); Lendl, Michaela, 8408 Winterthur (CH); Jäckle, Timo, 78247 Hilzingen (DE)
(74) Vertreter: Fenner, Seraina

(56) Entgegenhaltungen:
- EP-A1- 1 376 289
- EP-A2- 1 726 855
- WO-A1-90/15977
- US-A- 4 694 848

## Beschreibung

Die Erfindung betrifft ein Ventil mit einer Leckageanzeige enthaltend ein Ventilgehäuse vorzugsweise aus mindestens zwei Teilen, einem Ventilgehäuseoberteil und einem Ventilgehäuseunterteil und eine Membrane, wobei die Membrane das Ventilgehäuse in einen fluiddurchströmten Bereich und in einen fluidfreien Bereich unterteilt.

Ventile wie Druckregelventil oder Membranventile weisen einen fluidfreien Bereich auf und einen Bereich durch den das Medium hindurchfliesst. In der Regel werden die beiden Bereiche durch eine Membrane voneinander getrennt.

Druckregelventile wie Überströmventile und Druckhalteventile, die in Rohrleitungssystemen verbaut sind, dienen der Konstanthaltung von Arbeits-und systembedingten Drücken. Sie ermöglichen den Ausgleich von Druckpulsationen und Abbau von Druckspitzen. Druckreduzierventile, die ebenfalls unter die Gruppe der Druckregelventile fallen, ermöglichen die Reduzierung des Anlagendrucks auf einen vorgegebenen Wert.
In solchen Druckregelventilen ist im fluidfreien Bereich eine Stelleinheit angeordnet, welche meist eine Feder, eine Spindel und einen Federteller beinhaltet. Die Spindel wird in der Regel durch eine Lagerung im Gehäuseoberteil geführt. Für eine zuverlässige Funktion eines solchen Ventils ist es deshalb unabdingbar, dass der fluidfreie Raum nicht durch das Medium kontaminiert wird. Würde durch ein Leck Flüssigkeit in den fluidfreien Raum eindringen, würde das die Funktion der Stelleinheit beeinflussen und das Ventil seine Funktionstüchtigkeit verlieren. Meist sind die Medien in solchen Rohrleitungssystemen korrosiv, wodurch die abgetragenen und mitgeführten Verunreinigungen ebenfalls durch das Leck in den fluidfreien Raum miteingebracht würden und eine Verschmutzung der Stelleinheit unabdingbar wäre. Bei Chemikalien, welche für die Umwelt schädlich sind besteht zudem die Gefahr, dass die Chemikalien über den fluidfreien Raum an die Umwelt gelangen.
Dadurch, dass solche Ventile komplett geschlossen und uneinsichtig sind, ist nicht erkennbar ob das Medium bereits in den fluidfreien Bereich bzw. Raum eingedrungen ist, wodurch eine frühzeitige Erkennung einer Leckage nicht gegeben ist.
Auch Membranventile sind ebenfalls von den oben erwähnten Nachteilen betroffen, da sie ebenfalls zwei Bereich, einen fluiddurchströmten und einen fluidfreien Bereich, welche durch eine Membrane getrennt sind aufweisen.

Das Anbringen eines Schauglases würde das Eindringen des Mediums in den fluidfreien Raum erst erkennen lassen, wenn bereits eine gut sichtbare Menge des Mediums in den fluidfreien Bereich eingedrungen ist. Das wäre in den meisten Fällen zu spät um einen Ventilausfall zu verhindern. Zudem wäre das Ventil kaum mehr mit einem geringen Aufwand bzw. wenigen Ersatzteilen zu reparieren sowie auch die Funktionstüchtigkeit nicht mehr einwandfrei gewährleistet wäre. Die Wahrscheinlichkeit eines kompletten Austauschs des Ventils wären sehr hoch, was hohe Kosten zur Folge hätte.
Membranventile werden beispielsweise zur Absperrung des Rohrleitungssystems eingesetzt. Liegt nun im fluidfreien Bereich bereits eine so starke Verunreinigung oder Zersetzung durch das Medium vor, dass die darin angeordnete Spindeleinheit nicht mehr funktioniert aber das von aussen nicht erkennbar ist und das Betätigungsorgan wie beispielsweisen ein Handrad trotzdem noch drehbar ist, wird nicht erkannt, dass das Membranventil nicht mehr schliessbar ist. Das Rohrleitungssystem wird dann trotzdem noch durchströmt auch wenn angenommen wird, dass das Membranventil geschlossen worden sei. Eine solche fälschlich Annahme kann zu grösseren Schäden führen beispielsweise bei einer Demontage einer Komponente bei durchströmtem Rohrleitungssystem.

Die WO 90/15977 offenbart ein Ventil, welches eine Leckagedetektor aufweist, der mit einer Steuerung verbunden ist. Durch das Detektieren eines Lecks infolge des Mediumeintritts in den fluidfreien Raum gibt der Detektor ein Signal an die Steuerung weiter, welches die Pumpe zur Förderung des Mediums ausschaltet.

Nachteilig an diesem System ist der hohen technische Aufwand zur Erkennung einer Leckage. Durch die benötigten elektronischen Komponenten ist ein solches Ventil teuer und störungsanfällig.

Auch aus der EP 1 726 855 wird ein Ventil mit einem Leckagedetektor bekannt.

Es ist Aufgabe der Erfindung ein Ventil vorzuschlagen, bei welchem ein internes Leck durch kostengünstige Mittel frühzeitig von aussen erkennbar ist.

Diese Aufgabe wird erfindungsgemäss dadurch gelöst, dass die Leckageanzeige durch ein saugfähiges Element gebildet ist, wobei das saugfähige Element in den fluidfreien Bereich ragt.
Das saugfähige Element ist vorzugsweise am Ventilgehäuseoberteil befestigt. Das saugfähige Element ragt aus dem Gehäuse hinaus, wodurch das Austrittsende des saugfähigen Elements durch das blosse Auge gut erkennbar ist. Vorzugsweise wird das saugfähige Element über eine Bohrung im Ventilgehäuse in den fluidfreien Bereich geführt.

Hauptsächlich Druckregelventile oder Membranventile werden mit einer solchen Leckageanzeige ausgestattet. Für eine derartige Detektion ist es unabdingbar, dass das Ventil mindestens zwei Bereich aufweist, einen Bereich der das Medium fördert bzw. vom Medium durchströmt wird und einen der mediumsfrei ist, der fluidfreie Bereich bzw. Raum, welcher durch eine Membrane getrennt vom fluiddurchströmten Bereich ist. Ob mehrere Membranen zur Unterteilung der Bereiche eingesetzt werden oder nur eine ist nicht massgebend. Bei mehreren eingesetzten Membranen besteht zudem die Möglichkeit, dass das saugfähige Element in den Bereich zwischen die beiden Membranen hinein ragt.

Das saugfähige Element ist vorzugsweise durch einen Halter, welcher an der Aussenseite des Ventilgehäuses angeordnet ist, befestigt. Von Vorteil ist, wenn der Halter einen Sichtbereich aufweist, eventuell durch Glas oder einen durchsichtigen Kunststoff durch den das saugfähige Element bzw. das Austrittsende des Elements erkennbar ist und dadurch einfach die Verfärbung des Elements festgestellt werden kann, wenn es eingetretene Flüssigkeit aufsaugt.

Bevorzugterweise ist das saugfähige Element mit einem Indikator vorzugsweise einem Universalindikator oder einem selektiven Indikator versehen bzw. getränkt. Dadurch verfärbt sich das saugfähige Element bei Feuchtigkeitsaufnahme entsprechend dem PH-Wert der aufgenommenen Feuchtigkeit bzw. des ins Ventiloberteil eingedrungenen Mediums bei das Verwendung eines Universalindikators. Der Universalindikator sollte vorzugsweise PH-Werte anzeigen, die ausserhalb des neutralen Bereichs liegen, da Medien die korrosiv sind eher ein Leck verursachen und diese keinen neutralen PH-Wert aufweisen. Deshalb wird eine solche Anzeige hauptsächlich bei Medien eingesetzt, die eine PH-Wert haben der über oder unter dem neutralen PH-Wert von sieben liegt.
Die Verwendung eines selektiven Indikatoren ermöglicht die Anzeige eines bestimmten Mediums unabhängig des PH-Werts.

Alternativ kann auch nur das Austrittsende des saugfähigen Elements mit dem Indikator versehen sein. Durch die Aufnahme der Flüssigkeit des Elements, welche gegen das Austrittsende geleitet bzw. gesaugt wird, reicht es aus wenn sich nur das Austrittsende verfärbt, da auch nur dieses von aussen ersichtlich ist.

Das saugfähige Element besteht aus Material, welches ein gutes Saugvermögen aufweist, welches durch die Kapillarkräfte hervorgerufen wird. Das heisst, dass die atomaren Anziehungskräfte zwischen dem Material des saugfähigen Elements und der Flüssigkeit grösser sind als die der Flüssigkeitsmoleküle untereinander.

Als bevorzuget Ausführungsform eines saugfähigen Elements kann ein Docht verwendet werden, der vorzugsweise eine fadenförmige Struktur besitzt.

Vorzugsweise ist das saugfähige Element aus faserförmigem Material z.B. Glasfasern oder porösen Sinterkörpern z.B. Polyethylen, vorzugsweise hydrophiliert hergestellt. Diese Materialien sind sehr saugfähig und gewährleisten eine schnelle Flüssigkeitsaufnahme wodurch das Leck bereits bei einer geringen Menge des Mediums ersichtlich wird.

Die Querschnittsfläche eines saugfähigen Elements ist vorzugsweise kleiner als 50mm². Durch einen geringen Querschnitt bedarf es sehr wenig an Flüssigkeit bis sie erkennbar am Element ist bzw. in den erkennbaren Bereich hochgesogen wurde. Ein bevorzugter Durchmesser eines saugfähigen Elements das vorteilhaft als Docht ausgebildet ist liegt bei 3-5mm, wobei auch ein entsprechend rechteckiger Querschnitt denkbar ist.

Ausführungsbeispiele der Erfindung werden anhand der Figuren beschrieben, wobei sich die Erfindung nicht nur auf die Ausführungsbeispiele beschränkt. Es zeigen:
- Fig.: 1 einen Längsschnitt durch ein erfindungsgemässes Druckregelventil mit einer Leckageanzeige und

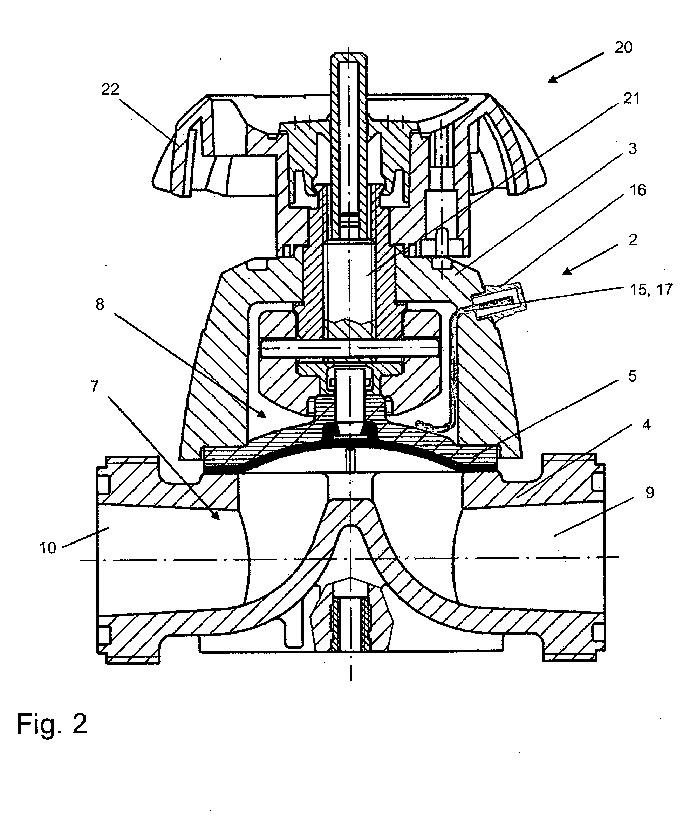

- Fig. 2: einen Längsschnitt durch ein erfindungsgemässes Membranventil mit einer Leckageanzeige

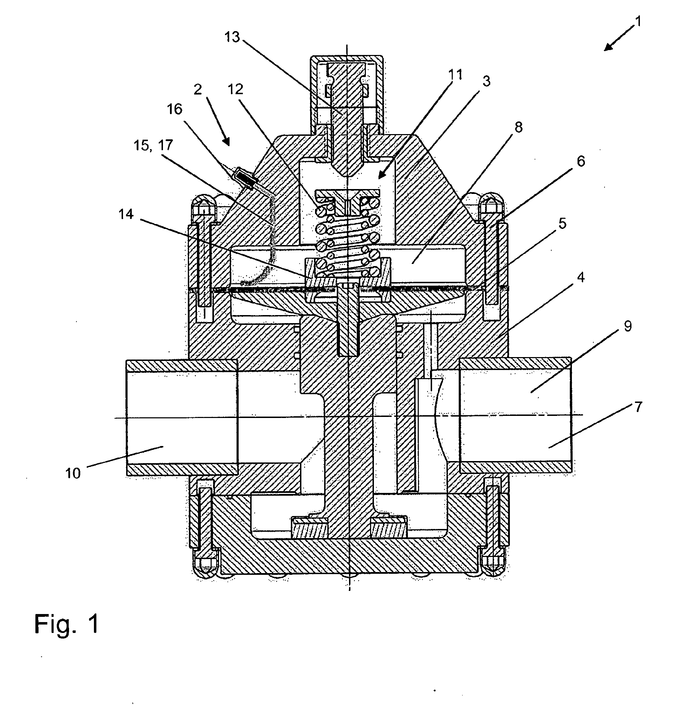

Fig. 1 zeigt einen Längsschnitt durch ein Druckregelventil 1 mit einer Leckageanzeige 2. Das Ventilgehäuse enthält ein Ventilgehäuseoberteil 3 und ein Ventilgehäuseunterteil 4. Die beiden Teile des Ventilgehäuses werden durch Befestigungsmittel 6 miteinander verbunden. Vorzugsweise werden Schrauben dazu eingesetzt, wobei auch eine direkte Verschraubung der beiden Gehäuseteile miteinander denkbar ist indem beispielsweise am Gehäuseunterteil ein Aussengewinde und am Gehäuseoberteil ein Innengewinde angeordnet ist, die direkt miteinander verschraubt werden. Die Membrane 5 unterteilt das Gehäuse in zwei Bereiche. Unterhalb der Membrane 5 befindet sich der fluiddurchströmte Bereich 7. In der Regel weist er einen Eingang des Strömungskanals 9 und einen Ausgang des Strömungskanals 10 auf, wobei auch mehrere Ein-und Ausgänge möglich sind. Oberhalb der Membrane 5 befindet sich der fluidfreie Bereich 8. Der Raum 8 ist durch die Membrane 5 vom fluiddurchströmten Bereich abgetrennt. Darin angeordnet ist die Stelleinheit 11, welche die Strömung bzw. den Druck regelt. Meist wird ein solches Ventil 1 einmal auf einen bestimmten Wert bzw. Druck eingestellt und dabei belassen, weshalb in Fig. 1 kein Bedienorgan wie beispielsweise ein Handrad abgebildet ist um das Ventil einzustellen, da dieses nach der Einstellung entfernt wird. Die Stelleinheit beinhaltet in der Regel eine Feder 12, eine Spindel 13, welche meist durch eine Lagerung im Gehäuseoberteil 3 geführt ist und einen Federteller 14. Da dieser Raum in dem die Stelleinrichtung 11 angeordnet ist fluidfrei ist, ist gewährleistet, dass der Raum sowie die Stelleinheit 11 nicht verschmutzt und die Funktionstüchtigkeit des Ventil bzw. das Beibehalten des konstanten Drucks gewährleistet ist. Deshalb ist eine frühzeitige Erkennung eines Lecks wichtig. Zudem könnten Medien, die in den fluidfreien Bereich 8 eintreten einfach an die Umwelt gelangen, was bei manchen chemischen Medien, die in einem Rohrleitungssystem transportiert werden schädlich für die Umwelt wäre.

Zur Anzeige ob ein Leck in der Membrane 5 vorliegt, ragt ein saugfähiges Element 15, hier als Docht 15 ausgebildet, der als Leckageanzeige 2 dient, in den fluidfreien Bereich bzw. Raum 8. Der Docht 15 wird durch einen Halter 16, welcher beispielsweise an der Aussenseite des Ventilgehäuses angeordnet ist, befestigt. Der Docht 15 verläuft vorzugsweise in einer Bohrung 17 durch das Ventilgehäuseoberteil 3 und ragt dann in den fluidfreien Bereich 8. Vorzugsweise liegt er auf der Membrane 5 auf und verteilt sich regelmässig auf der Fläche der Membrane 5. Vorstellbar ist, dass der Docht 15 sich spiralförmig auf der Membrane 5 ausbreitet. Dadurch ist gewährleistet, dass eine grosse Fläche mit dem Docht 15 abgedeckt ist auch wenn die Windungen nicht aneinander anliegen sondern mit einem Abstand zueinander aufgewunden sind. Durch diese grosse Flächenabdeckung lässt sich bereits das Eindringen von nur wenig Flüssigkeit in den fluidfreien Bereich 8 erkennen. Auch andere Verläufe des Dochts 15 sind vorstellbar, wichtig ist, dass der Docht 15 bis auf die Membrane 5 ragt. Durch das Aufsaugen der Flüssigkeit durch den Docht 15 verfärbt sich der Docht 15 bzw. der Indikator mit dem der Docht 15 versehen ist. Bei der Verwendung eines Universalindikators verfärbt sich der Indikator entsprechend des PH-Werts des Mediums, wodurch ein Leck schnell ersichtlich gemacht wird, jedoch kann auch ein anderer Indikator verwendet werden. Durch die Verfärbung ist die Flüssigkeitsaufnahme besser erkennbar als wenn keine Verfärbung stattfinden würde und nur der nasse Docht 15 als Indikator dienen würde. Dadurch, dass diese Medien meist korrosiv sind bzw. ein Leck eher bei einem Medium entsteht welches korrosiv ist verfärbt sich der Docht 15, welcher mit dem Universalindikator versehen ist entsprechend. Korrosive Medien haben entsprechend keinen neutralen PH-Wert und eignen sich deshalb sehr gut für die Erkennung durch den Universalindikator. Es reicht vollkommen aus, wenn der Docht 15 nur am Austrittsende mit diesem Universalindikator getränkt ist, da nur dieser Abschnitt des Dochts 15 ersichtlich ist und er die aufgenommene Flüssigkeit bis ans Austrittsende des Dochts 15 durch die Kapillarkräfte hochsaugt und sich entsprechend dort verfärbt. Vorzugsweise weist der Halter 16 ein Schauglas auf, durch den die Verfärbung erkennbar ist.

Fig. 2 zeigt ein Membranventil 20 mit einer Leckageanzeige 2. Das Ventilgehäuse beinhaltet unter anderem ein Verntilgehäuseoberteil 3 und ein Ventilgehäuseunterteil 4. Die Membrane 5 teilt das Ventilgehäuse in einen fluiddurchströmten Bereich 7 und einen fluidfreien Bereich 8. Im fluidfreien Bereich 8 ist die Spindelanordnung 21 angeordnet, welche die Membrane 5 und das Bedienorgan 22 miteinander verbindet und dadurch die Membrane 5 verstellbar ist. Durch den fluidfreien Raum 8 ist eine zuverlässige Funktion der Verstellung des Ventils 20 bzw. der Membrane 5 gewährleistet, da die Spindelanordnung 21 keine Verunreinigung erfährt. Wenn nun ein Leck beispielsweise in der Membrane 5 auftritt ist es wichtig dies frühzeitig zu erkennen um den Schaden gering zu halten und die Funktionstätigkeit des Ventils 20 zu gewährleisten. Bei einer Verschmutzung der Spindelanordnung 21 kann es sonst vorkommen, dass sich das Ventil 20 nicht mehr schliessen lässt und dadurch eine Absperrung der Rohrleitung in die das Ventil 20 eingebaut ist, verunmöglicht wird. Durch ein erfindungsgemässes Ventil 1, 20 mit einer Leckageanzeige wird frühzeitig erkannt, wenn ein Leck aufgetreten ist und die Flüssigkeit bzw. das Medium in den fluidfreien Bereich 8 eingedrungen ist, wodurch das Leck frühzeitig behoben und der Schaden gering gehalten werden kann. Was durch die verschlossenen und uneinsichtigen Ventile ansonsten nicht möglich ist. Der Docht 15 dient der Leckageanzeige 2 und weist, wie bereits beim Druckregelventil 1 erwähnt einen Indikator auf. Ebenso ist es auch hier von Vorteil, wenn sich der Docht 15 über eine grosse Fläche im fluidfreie Raum 8 erstreckt bzw. verteilt. Durch die Ausbreitung des Dochts 15 auf der Membrane 5 wird ein Leck bereits bei einer geringen Menge an eingetretenem Medium erkannt. Auch beim Membranventil 20 wird der Docht 5 durch einen Halter 16, welcher sich vorzugsweise an der Aussenseite des Ventilgehäuses befindet, befestigt. Die Bohrung zur Führung des Dochts 15 verläuft im Membranventils 20 durch das Ventilgehäuseoberteil 3, welches auch die Klemmung der Membrane 5 übernimmt. Die Bohrung 17 verläuft bei all den Ventilen die eine Leckageanzeige 2 durch einen Docht 15 umsetzen vom fluidfreien Bereich 8 bis hin zur Halterung welche sichtbar an der Aussenseite des Gehäuses angeordnet ist, damit der Docht 15 bzw. die Verfärbung von blossem Auge und ohne das Ventil öffnen zu müssen erkennbar ist.

### Bezugszeichen liste

- 1: Druckregelventil
- 2: Leckageanzeige
- 3: Ventilgehäuseoberteil
- 4: Ventilgehäuseunterteil
- 5: Membrane
- 6: Befestigungsmittel
- 7: Fluiddurchströmter Bereich
- 8: Fluidfreier Bereich
- 9: Eingang Strömungskanal
- 10: Ausgang Strömungskanal
- 11: Stelleinheit
- 12: Feder
- 13: Spindel
- 14: Federteller
- 15: Saugfähiges Element, Docht
- 16: Halter
- 17: Bohrung
- 18:
- 19:
- 20: Membanventil
- 21: Spindelanordnung
- 22: Bedienorgan

## Patentansprüche

1. Ventil (1, 20) mit einer Leckageanzeige (2) enthaltend ein Ventilgehäuse vorzugsweise aus mindestens zwei Teilen, einem Ventilgehäuseoberteil (3) und einem Ventilgehäuseunterteil (4) und eine Membrane (5), wobei die Membrane das Ventilgehäuse in einen fluiddurchströmten Bereich (7) und in einen fluidfreien Bereich (8) unterteilt, **dadurch gekennzeichnet, dass** die Leckageanzeige (2) durch ein saugfähiges Element (15) gebildet ist, wobei das saugfähige Element (15) in den fluidfreien Bereich (8) ragt.

2. Ventil (1, 20) nach Anspruch 1, **dadurch gekennzeichnet, dass** das Ventil (1, 20) ein Membranventil (20) oder ein Druckregelventil (1) ist.

3. Ventil (1, 20) nach einer der Ansprüche 1 oder 2, **dadurch gekennzeichnet, dass** das saugfähige Element (15) insbesondere das Austrittsende des saugfähigen Elements (15) mittels eines Halters (16) befestigt ist.

4. Ventil (1, 20) nach einem der Ansprüche 1 bis 3, **dadurch gekennzeichnet, dass** das saugfähige Element (15) mit einem Indikator versehen ist, vorzugsweise einem Universalindikator oder einem selektiven Indikator.

5. Ventil (1, 20) nach einem der vorangehenden Ansprüche, **dadurch gekennzeichnet, dass** das Austrittsende des saugfähigen Elements (15) mit einem Indikator versehen ist, vorzugsweise einem Universal indikator oder einem selektiven Indikator.

6. Ventil (1, 20) nach einem der vorangehenden Ansprüche, **dadurch gekennzeichnet, dass** das saugfähige Element (15) ein Docht ist.

7. Ventil (1, 20) nach einem der vorangehenden Ansprüche, **dadurch gekennzeichnet, dass** das saugfähige Element (15) aus Glasfasermaterial oder hydrophiliertem Polyethylen hergestellt ist.

8. Ventil (1, 20) nach einem der vorangehenden Ansprüche, **dadurch gekennzeichnet, dass** das saugfähige Element (15) eine Querschnittfläche aufweist, die kleiner als 50mm² ist.

## Claims

1. Valve (1, 20) with a leakage indicator (2) containing a valve housing, preferably of at least two parts, a valve housing upper part (3) and a valve housing lower part (4) and a diaphragm (5), wherein the diaphragm divides the valve housing into a fluid-flow area (7) and into a fluid-free area (8), **characterized in that** the leakage indicator (2) is formed by an absorbent element (15) wherein the absorbent element (15) projects into the fluid-free area (8).

2. Valve (1, 20) according to Claim 1 **characterized in that** the valve (1, 20) is a diaphragm valve (20) or a pressure regulating valve (1).

3. Valve (1, 20) according to one of Claims 1 and 2 **characterized in that** the absorbent element (15), more particularly the outlet end of the absorbent element (15) is fixed by means of a holder (16).

4. Valve (1, 20) according to one of Claims 1 and 3 **characterized in that** the absorbent element (15) is provided with an indicator, preferably a universal indicator or a selective indicator.

5. Valve (1, 20) according to one of the preceding claims **characterized in that** the outlet end of the absorbent element (15) is provided with an indicator, preferably a universal indicator or a selective indicator.

6. Valve (1, 20) according to one of the preceding claims **characterized in that** the absorbent element (15) is a wick.

7. Valve (1, 20) according to one of the preceding claims **characterized in that** the absorbent element (15) is made from glass fibre material or hydrophilic polyethylene.

8. Valve (1, 20) according to one of the preceding claims **characterized in that** the absorbent element (15) has a cross-sectional surface area which is smaller than 50 mm².

## Revendications

1. Soupape (1, 20) munie d'un affichage des fuites (2), comprenant un boîtier de soupape constitué de préférence d'au moins deux parties, une partie supérieure de boîtier de soupape (3) et une partie inférieure de boîtier de soupape (4), et une membrane (5), la membrane divisant le boîtier de soupape en une région parcourue par un fluide (7) et une région dépourvue de fluide (8), **caractérisée en ce que** l'affichage des fuites (2) est formé par un élément d'aspiration (15), l'élément d'aspiration (15) pénétrant dans la région dépourvue de fluide (8).

2. Soupape (1, 20) selon la revendication 1, **caractérisée en ce que** la soupape (1, 20) est une soupape à membrane (20) ou une soupape de régulation de pression (1).

3. Soupape (1, 20) selon l'une quelconque des revendications 1 ou 2, **caractérisée en ce que** l'élément d'aspiration (15), en particulier l'extrémité de sortie de l'élément d'aspiration (15), est fixé(e) au moyen d'un support (16).

4. Soupape (1, 20) selon l'une quelconque des revendications 1 à 3, **caractérisée en ce que** l'élément d'aspiration (15) est pourvu d'un indicateur, de préférence un indicateur universel ou un indicateur sélectif.

5. Soupape (1, 20) selon l'une quelconque des revendications précédentes, **caractérisée en ce que** l'extrémité de sortie de l'élément d'aspiration (15) est pourvue d'un indicateur, de préférence un indicateur universel ou un indicateur sélectif.

6. Soupape (1, 20) selon l'une quelconque des revendications précédentes, **caractérisée en ce que** l'élément d'aspiration (15) est une mèche.

7. Soupape (1, 20) selon l'une quelconque des revendications précédentes, **caractérisée en ce que** l'élément d'aspiration (15) est fabriqué en matériau renforcé par des fibres ou en polyéthylène hydrophilisé.

8. Soupape (1, 20) selon l'une quelconque des revendications précédentes, **caractérisée en ce que** l'élément d'aspiration (15) présente une surface transversale qui est inférieure à 50 mm².
